# EUROPEAN PATENT APPLICATION

(11) **EP 2 387 268 A1**
(43) Date of publication of application: **16.11.2011**
(21) Application number: 10729113.0
(22) Date of filing: 12.01.2010
(51) Int. Cl.: H04W 28/00

(54) **TRANSMISSION METHOD, DEVICE AND SYSTEM FOR UPLINK INFORMATION**

(30) Priority: 12.01.2009 CN 200910001785
(71) Applicant: Huawei Technologies Co., Ltd., Shenzhen, Guangdong 518129 (CN)
(72) Inventor: WAN, Lei, Shenzhen Guangdong 518129 (CN); ZHAO, Yajun, Shenzhen Guangdong 518129 (CN); CHENG, Xingqing, Shenzhen Guangdong 518129 (CN); REN, Xiaotao, Shenzhen Guangdong 518129 (CN)
(74) Representative: Charles, Glyndwr
(86) International application number: PCT/CN2010/070132
(87) International publication number: WO 2010/078854

(57) **Abstract**

A method, an apparatus and a system for transmitting uplink information are provided. The method includes: obtaining an uplink physical resource and an uplink mapping rule corresponding to a Physical Uplink Control Channel, PUCCH, and/or a Physical Random Access Channel, PRACH, and/or a Reference Symbol, RS, which are negotiated by coordinated cells; and using the uplink physical resource to transmit uplink control information and/or random access information and/or the RS according to the uplink mapping rule. Multiple coordinated cells collaborate to allocate the uplink physical resource corresponding to the PUCCH and/or the PRACH and/or the RS, and use the uplink physical resource to transmit the uplink control information and/or the random access information and/or the RS according to the uplink mapping rule. In this way, the uplink control information, the random access information, and the RS are transmitted by the coordinated cells collaboratively; the effective coverage of the coordinated cells is improved; and the interference between the coordinated cells is reduced effectively.

## Description

This application claims priority to Chinese Patent Application No. CN200910001785.3, filed with the Chinese Patent Office on January 12, 2009 and entitled "Method, Apparatus and System for Transmitting Uplink Information", which is hereby incorporated by reference in its entirety.

### FIELD OF THE INVENTION

The present invention relates to the field of communication technologies, and in particular, to a method, an apparatus, and a system for transmitting uplink information.

### BACKGROUND OF THE INVENTION

Downlink Coordinated Multi-Point (CoMP) transmission in a CoMP transmission technology is applicable in a radio communication system to improve downlink transmission performance of a User Equipment (UE) at an edge of a cell. Specifically, multiple cells work in cooperation mode to transmit signals to the same UE in order to improve the signal to interference-and-noise ratio (SINR) of a signal received by the UE or enhance throughput of the system transmission. Multiple cells that transmit signals to the same UE by using the CoMP technology are called coordinated cells. Coordinated cells are categorized into anchor cells and serving cells. For uplink data information, the shared physical resources corresponding to a Physical Uplink Shared Channel (PUSCH) may be allocated by coordinated cells in cooperation mode. That is, multiple coordinated cells may collaborate to transmit (receive and/or send) uplink data information; for uplink control information, random access information, and Reference Symbol (RS), the control physical resource corresponding to a Physical Uplink Control Channel (PUCCH), the access physical resource corresponding to a Physical Random Access Channel (PRACH), and the reference physical resource corresponding to an RS are only allocated by an anchor cell independently. In other words, the uplink control information and the RS can only be transmitted by the anchor cell among the coordinated cells. Therefore, the effective coverage of the coordinated cells is reduced and the interference between the coordinated cells is intensified.

Moreover, although the shared physical resources corresponding to the PUSCH can be allocated by coordinated cells in cooperation mode, the coordinated cells are incapable of allocating the shared physical resources in cooperation mode if a frequency modulation technology or a scrambling technology is applied, which leads to conflict of the shared physical resources.

### SUMMARY OF THE INVENTION

The embodiments of the present invention provide a method, an apparatus, and a system for transmitting uplink information to improve effective coverage of coordinated cells and reduce interference between the coordinated cells.

An embodiment of the present invention provides a method for transmitting uplink information, where the method includes:
allocating, by a first coordinated cell, to a UE, an uplink physical resource of a virtual cell to which the first coordinated cell belongs, where the virtual cell includes one or more coordinated cells serving the UE in cooperation mode, and the uplink physical resource comprises at least one of a control physical resource, an access physical resource, and a reference physical resource; and
notifying, by the first coordinated cell, the uplink physical resource to the UE so that the UE uses the uplink physical resource.

An embodiment of the present invention provides a method for transmitting uplink information, where the method includes:
obtaining an uplink physical resource and an uplink mapping rule corresponding to a second object which are negotiated by coordinated cells, where the second object comprises at least one of a Physical Uplink Control Channel (PUCCH), a Physical Random Access Channel (PRACH), or an RS; and
transmitting the second object by using the uplink physical resource according to the uplink mapping rule.

An embodiment of the present invention provides another method for transmitting uplink information, where the method includes:
obtaining a frequency hopping mode and/or a multi-antenna sending mode of a shared physical resource corresponding to a Physical Uplink Shared Channel (PUSCH) which are negotiated by coordinated cells; and
transmitting uplink data information by using the shared physical resource according to the frequency hopping mode and/or the multi-antenna sending mode.

An embodiment of the present invention provides an apparatus for transmitting uplink information, where the apparatus includes:
a first obtaining module, configured to obtain an uplink physical resource and an uplink mapping rule corresponding to a PUCCH and/or a PRACH and/or an RS which are negotiated by coordinated cells; and
a first transmitting module, configured to transmit uplink control information and/or random access information and/or the RS by using the uplink physical resource according to the uplink mapping rule.

An embodiment of the present invention provides another apparatus for transmitting uplink information, where the apparatus includes:
a second obtaining module, configured to obtain a shared physical resource and a frequency hopping mode and/or a multi-antenna sending mode corresponding to a PUSCH which are negotiated by coordinated cells; and
a second transmitting module, configured to transmit uplink data information by using the shared physical resource to according to the frequency hopping mode and/or the multi-antenna sending mode.

It can be known from the foregoing technical solutions that, in the embodiments of the present invention, multiple coordinated cells perform collaborative transmission. Multiple coordinated cells collaborate to allocate the uplink physical resource corresponding to the PUCCH and/or the PRACH and/or the RS, and the uplink physical resource is used to transmit the uplink control information and/or the random access information and/or the RS according to the uplink mapping rule. In this way, multiple coordinated cells also collaborate to transmit the uplink control information, the random access information, and the RS; the effective coverage of coordinated cells is improved; and the interference between the coordinated cells is effectively reduced.

Further, in the embodiments of the present invention, multiple coordinated cells negotiate the frequency hopping mode and/or multi-antenna mode of the shared physical resource. In this way, the conflict between shared physical resources is reduced if a frequency hopping technology or a scrambling technology is applied.

### BRIEF DESCRIPTION OF THE DRAWINGS

To make the technical solutions under the present invention or in the prior art clearer, the following outlines the accompanying drawings involved in the description of the embodiments of the present invention or the prior art. Apparently, the accompanying drawings outlined below are illustrative rather than exhaustive, and persons of ordinary skill in the art can derive other drawings from such accompanying drawings without any creative effort.
FIG 1 is a flowchart of a method for transmitting uplink information according to Embodiment 1 of the present invention;
FIG 2 is a flowchart of a method for transmitting uplink information according to Embodiment 2 of the present invention;
FIG 3 is a flowchart of a method for transmitting uplink information according to Embodiment 3 of the present invention;
FIG 4 is a flowchart of a method for transmitting uplink information according to Embodiment 4 of the present invention;
FIG 5 is a flowchart of a method for transmitting uplink information according to Embodiment 5 of the present invention;
FIG 6 is a flowchart of a method for transmitting uplink information according to Embodiment 6 of the present invention;
FIG 7 is a flowchart of another method for transmitting uplink information according to Embodiment 7 of the present invention;
FIG 8 is a schematic structural diagram of an apparatus for transmitting uplink information according to Embodiment 8 of the present invention; and
FIG 9 is a schematic structural diagram of another apparatus for transmitting uplink information according to Embodiment 9 of the present invention.

### DETAILED DESCRIPTION OF THE EMBODIMENTS

The following detailed description is given in conjunction with the accompanying drawings to provide a clear understanding of the present invention. Evidently, the drawings and the detailed description are merely representative of particular embodiments of the present invention rather than all embodiments. All other embodiments, which can be derived by those skilled in the art from the embodiments given herein without any creative effort, shall fall within the protection scope of the present invention.

In a CoMP system, network nodes include: a base station, and one or more Access Points (APs) and UEs. The APs are scattered geographically and connected to the same base station or different base stations. Multiple APs may collaborate to transmit and receive data. The collaborative APs may belong to the same base station or different base stations, which does not affect the implementation of the embodiments of the present invention.

The relation between an AP and a cell may be: One cell includes one or more APs, or, one or more APs serve the same UE, which does not affect the implementation of the embodiments of the present invention. For ease of description, in the following embodiments of the present invention, one cell including only one AP is taken as an example for illustration. Evidently, when one cell includes multiple APs, each AP is equivalent to a coordinated cell and can also implement the embodiments of the present invention.

The transmission mode of uplink data information differs from that of uplink control information, random access information, and an RS. Therefore, coordinated cells may collaborate to transmit the uplink data information, while coordinated cells cannot collaborate to transmit the uplink control signal, the random access signal or the RS. Therefore, the coverage of an uplink control signal transmitted by a PUCCH, a random access signal transmitted by a PRACH, and an RS is narrower than the coverage of an uplink data signal transmitted by a PUSCH, so that the effective coverage of the coordinated cells is limited by the coverage of the control signal transmitted by the PUCCH, the random access signal transmitted by the PRACH, and the RS, thereby reducing the effective coverage of the coordinated cells. Therefore, embodiments of the present invention need to provide a method for transmitting uplink signal, so that the uplink control signal, the random access signal, and the RS can also be transmitted in a collaborative mode; the coverage of the uplink control signal transmitted by the PUCCH, the random access signal transmitted by the PRACH, and the RS is the same as the coverage of the uplink data signal transmitted by the PUSCH; and the effective coverage of coordinated cells is expanded.

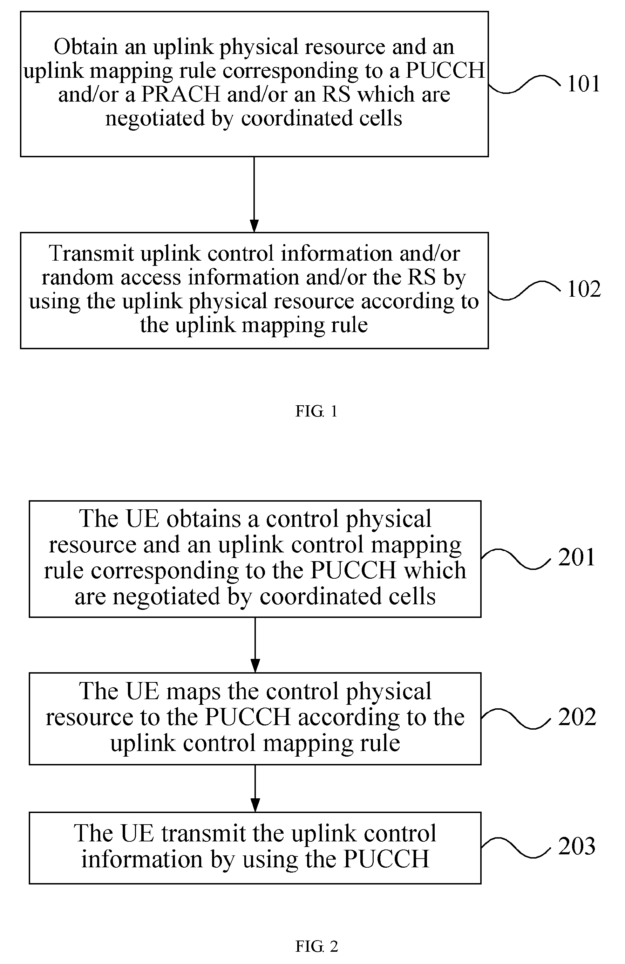

FIG 1 is a flowchart of a method for transmitting uplink information according to Embodiment 1 of the present invention. As shown in FIG 1, the method for transmitting uplink information in this embodiment includes the following steps:
Step 101: Obtain an uplink physical resource and an uplink mapping rule corresponding to a PUCCH and/or a PRACH and/or an RS which are negotiated by coordinated cells.
Step 102: Transmit uplink control information and/or random access information and/or the RS by using the uplink physical resource according to the uplink mapping rule.

The uplink physical resource includes one or more of the following physical resources: a control physical resource corresponding to the PUCCH, an access physical resource corresponding to the PRACH, and a reference physical resource corresponding to the RS. The uplink mapping rule includes one of more the following mapping rules: an uplink control mapping rule, an access mapping rule, and a reference mapping rule.

In this embodiment of the present invention, multiple coordinated cells perform collaborative transmission. Multiple coordinated cells collaborate to allocate the uplink physical resource corresponding to the PUCCH and/or the PRACH and/or the RS, and the uplink physical resource is used to transmit the uplink control information and/or the random access information and/or the RS according to the uplink mapping rule. In this way, coordinated cells can also collaborate to transmit the uplink control information, the random access information, and the RS; the coverage of the uplink control signal transmitted by the PUCCH, the random access signal transmitted by the PRACH, and the RS is the same as the coverage of the uplink data signal transmitted by the PUSCH; and the effective coverage of the coordinated cells is improved.

Meanwhile, in the prior art, the control physical resource corresponding to the PUCCH, the access physical resource corresponding to the PRACH, and the reference physical resource corresponding to the RS are allocated by an anchor cell to a UE in this cell independently without taking account of other coordinated cells, so mutual interference between the coordinated cells is caused. For example, cell 1 and cell 2 are coordinated cells of UE1; for UE1, cell 1 is an anchor cell, and cell 2 is a serving cell; cell 2 and cell 3 are coordinated cells of UE2; for UE2, cell 2 is an anchor cell, and cell 3 is a serving cell. As an anchor cell of UE1, cell 1 allocates an uplink control physical resource to UE1; as an anchor cell of UE2, cell 2 allocates an uplink control physical resource to UE2 independently. When the uplink control physical resource allocated by cell 1 to UE1 is the same as or interferes strongly with the uplink control physical resource allocated by cell 2 to UE2, the uplink information transmitted by UE1 through this resource will interference with the uplink information transmitted by UE2.

In this embodiment of the present invention, multiple coordinated cells perform collaborative allocation so as to maximally prevent the coordinated cells from allocating corresponding resources which are the same or interfere with each other strongly to the served UEs, and reduce interfere among coordinate cells effectively.

FIG 2 is a flowchart of a method for transmitting uplink information according to Embodiment 2 of the present invention. As shown in FIG 2, the method for transmitting uplink information in this embodiment includes the following steps:
Step 201: A UE obtains a control physical resource and an uplink control mapping rule corresponding to a PUCCH which are negotiated by coordinated cells.
Step 202: The UE maps the control physical resource to the PUCCH according to the uplink control mapping rule.
Step 203: The UE uses the PUCCH to transmit uplink control information.

In the method for transmitting uplink information in this embodiment, multiple coordinated cells collaborate to transmit the uplink control information, the control physical resource corresponding to the PUCCH is allocated by the multiple coordinated cells in cooperation mode, so that the control physical resource can be mapped to the PUCCH by using the uplink control mapping rule, and the uplink control information can be transmitted by using the PUCCH.

In this embodiment, multiple coordinated cells collaborate to transmit the uplink control information in cooperation mode. Therefore, the uplink control information can be transmitted in the same mode as the mode of transmitting the uplink data, performance of the PUCCH is improved; the coverage of the PUCCH is the same as the coverage of the PUSCH, so as to expand the effective coverage of the coordinated cells. Because the control physical resource corresponding to the PUCCH is allocated by the coordinated cells in cooperation mode, the interference to other UEs in the coordinated cells is prevented when the UE uses the control physical resource allocated by the anchor cell independently to transmit the uplink control information.

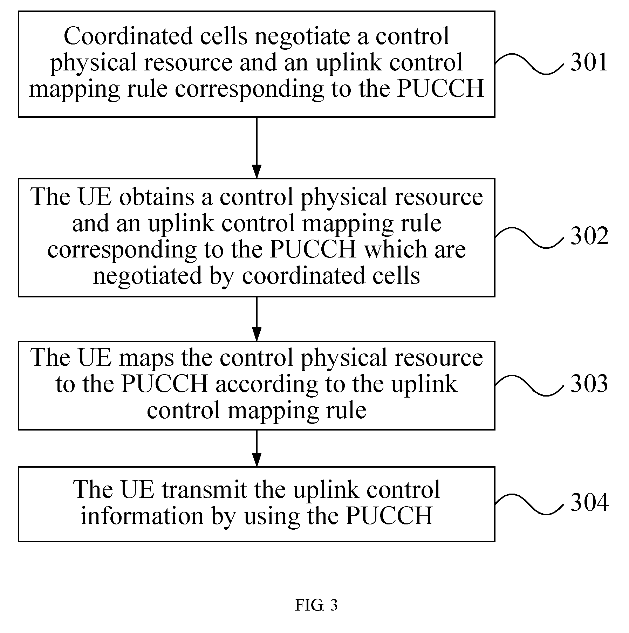

FIG 3 is a flowchart of a method for transmitting uplink information according to Embodiment 3 of the present invention. As shown in FIG. 3, the method for transmitting uplink information in this embodiment includes the following steps:
Step 301: Coordinated cells negotiate a control physical resource and an uplink control mapping rule corresponding to a PUCCH.

In this embodiment, an anchor cell alone may allocate the control physical resource used for the CoMP, or one or more serving cells may allocate the control physical resource uniformly used for CoMP. The serving cells involved in the allocation may be determined by the coordinated cells through negotiation or specified by the anchor cell, or may be preset. Alternatively, the coordinated cells (including the anchor cell and serving cells) allocate the control physical resource to each served UE independently after negotiation.

How the coordinated cells allocate the control physical resource through negotiation is exemplified in the following. It is assumed that there are two coordinated cells which are cell 1 and cell 2 respectively, and cell 1 and cell 2 form a CoMP cell (CoMP11); physical resources include resource group 1, resource group 2, resource group 3, and resource group 4; there are 4 UEs, which are UE1, UE2, UE3, and UE4 respectively; UE1 and UE2 are CoMP UEs served by coordinated cells in CoMP11 in cooperation mode; the anchor cell of UE1 is cell 1; the anchor cell of UE2 is cell 2; UE3 and UE4 are non-CoMP UEs; UE3 belongs to cell 1, and UE4 belongs to cell 2.

### Instance 1: Uniform allocation

Scenario 1: CoMP11 selects one of the resource groups (such as resource group 1); and a coordinated cell in CoMP11 allocates a resource in resource group 1 to CoMP UEs (UE1 and UE2). For example, resource group 1 includes resource a and resource b; if cell 1 allocates resource a in resource group 1 to UE1, cell 2 only allocates resource b rather than resource a to UE2. The CoMP11 may select the resource group in the following way: an anchor cell, a serving cell configured by the system, or a serving cell selected by the UE allocates the control physical resource. Further, the coordinated cells may allocate the control physical resource statically, or allocate the control physical resource dynamically according to service requirements and/or load. In this embodiment, the control physical resource negotiated by the coordinated cells may be all or part of the control physical resource corresponding to the coordinated cells. The coordinated cells may apply various transmission diversity modes as a sending mode. The sending diversity modes may be: Spatial Frequency Block Coding (SFBC) and Cyclic Delay Diversity (CDD). In other embodiments of the present invention, the allocation entity and the allocation mode may refer to the foregoing mode and are not repeated in the following.

Scenario 2: CoMP11 selects several of the resource groups (such as resource group 1 and resource group 2); and the coordinated cell in CoMP11 allocates a resource in the two resource groups to CoMP UEs (UE1 and UE2). For example, if resource group 1 includes resource a and resource b, and resource group 2 includes resource c and resource d, both cell 1 and cell 2 can allocate resources a, b, c, and d to UE1 and UE2. Once cell 1 allocates resource a in resource group 1 to UE1, cell 2 only allocates resource b, c, or d rather than resource a to UE2, futher, cell 2 can select a resource from resources b, c, and d which causes little mutual interference to resource a.

### Instance 2: Independent allocation

CoMP11 does not select one or several resource groups exclusively. However, the coordinated cells in CoME 11 negotiate with each other when allocating a resource to a CoMP UE. For example, if resource group 1 includes resource a and resource b, and resource group 2 includes resource c and resource d, cell 1 can allocate only resource a and resource b, and cell 2 can allocate only resource c and resource d to the UE. After allocating resource a in resource group 1 to UE1, cell 1 may notify cell 2 that resource a is used. In this way, cell 2 can select a resource from resources c and d which causes little mutual interference to resource a, and allocate the selected resource to UE2. That is, cell 1 and cell 2 can negotiate with each other when allocating resources. The resource allocated to UE3 may be the same as or different from the resource allocated to UE1, and the resource allocated to UE4 may be the same as or different from the resource allocated to UE2.
Step 302: The UE obtains a control physical resource and an uplink control mapping rule corresponding to a PUCCH which are negotiated by coordinated cells.
Step 303: The UE maps the control physical resource to the PUCCH according to the uplink control mapping rule.
Step 304: The UE uses the PUCCH to transmit the uplink control information.

The control physical resource includes: a carrier, a subcarrier, a Physical Resource Block (PRB), a subframe, a timeslot, a sequence/root sequence, a sequence offset, a sequence comb, a frequency hopping pattern, or a period, or any combination thereof.

In this embodiment, each coordinated cell may allocate a different PRB to each UE served by the coordinated cells in cooperation mode; or, each coordinated cell may allocate the same PRB to each UE served by the coordinated cells in cooperation mode, and apply the same root sequence and a different sequence offset; or, each coordinated cell may allocate the same PRB to each UE served by the coordinated cells in cooperation mode, and apply different root sequences, where the different root sequences may be sequences having low cross correlation.

In specific implementation, the coordinated cells may select a proper control physical resource through negotiation according to conditions of the UEs. For example, in the same coordinated cell, a CoMP UE may occupy a PRB which is the same as the PRB occupied by a UE that causes low mutual interference to the CoMP UE, and occupy a PRB which is different from the PRB occupied by a UE which causes high mutual interference to the CoMP UE; a CoMP UE may employ a root sequence which is different from the root sequence employed by a UE that causes low mutual interference in another coordinated cell, and employ a root sequence which is the same as the root sequence employed by a UE that causes high mutual interference in another coordinated cell, and employ a different sequence offset; and the coordinated cells may negotiate a frequency hopping pattern used by the CoMP UE.

In this embodiment, the coordinated cells may allocate the same PRB to all UEs served by the coordinated cells in cooperation mode, and each control physical resource may be mapped to the corresponding PUCCH according to the uplink control mapping rule.

In this embodiment, the uplink control information of the UE may be received by all coordinated cells simultaneously, or received by several of the coordinated cells, and then the information is combined and processed by an anchor cell, or by a coordinated cell specified in advance, or by a coordinated cell determined dynamically through negotiation; or the information is received by the anchor cell or a serving cell in other coordinated cell, and processed by the serving cell independently which receives the information.

In this embodiment, different coordinated cells collaborate to allocate, map, and/or scramble the PUCCH resources. The resources in use may be allocated, mapped, and/or scrambled independently; or the resources of different coordinated cells are the same group of PUCCH resources, and are allocated, mapped, and/or scrambled uniformly. Such variations do not affect the implementation of the embodiment.

In this embodiment, the method of the coordinated cells allocating the control physical resource is applicable to the relevant content in other embodiments, and is not repeated in the following embodiments of the present invention.

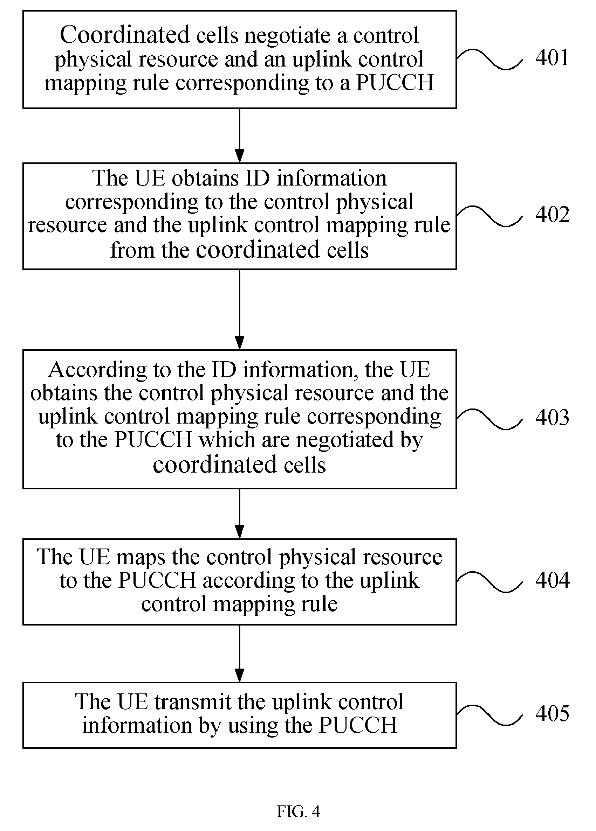

FIG 4 is a flowchart of a method for transmitting uplink information according to Embodiment 4 of the present invention. As shown in FIG 4, the method for transmitting uplink information in this embodiment includes the following steps:
Step 401: Coordinated cells negotiate a control physical resource and an uplink control mapping rule corresponding to a PUCCH.
Step 402: A UE obtains identifier, (ID), information corresponding to the control physical resource and the uplink control mapping rule from the coordinated cells.
Step 403: According to the ID information, the UE obtains the control physical resource and the uplink control mapping rule corresponding to the PUCCH which are negotiated by the coordinated cells.
Step 404: The UE maps the control physical resource to the PUCCH according to the uplink control mapping rule.
Step 405: The UE uses the PUCCH to transmit uplink control information.

In this embodiment, the control physical resource and the uplink control mapping rule corresponding to the PUCCH may correspond to one or more of the following: a CoMP-ID, a UE-ID, an anchor cell-ID, and a serving cell-ID. The CoMP-ID is different from an ordinary cell ID (such as anchor cell-ID and serving cell-ID), and is ID information specific to CoMP. The CoMP-ID indicates a virtual cell of the CoMP mode, and bears some of the features of an ordinary cell ID. The CoMP-ID may be used to identify features of the coordinated cell specific to CoMP, and serve a CoMP UE (namely, a UE in the CoMP state), and can be bound to the CoMP-specific sending mode and/or CoMP-specific resource. In this embodiment, the coordinated cells that collaborate to allocate the control physical resources may be all or part of the coordinated cells in the virtual cell that performs CoMP transmission. The coordinated cell needs to notify the CoMP UE of the UE-ID, the anchor cell-ID, and the CoMP-ID specific to CoMP, and may further notify the coordinated cells which collaborate with this coordinated cell. The coordinated cells may further notify the serving cell-ID to the CoMP UE.

In this embodiment, among the multiple IDs above, an ID corresponding to the control physical resource and the uplink control mapping rule may be used as a main ID according to different application scenarios. After the corresponding ID is selected as the leading ID, the mapping may be performed according to the control physical resource and the uplink control mapping rule corresponding to the leading ID, or uplink control mapping rules corresponding to multiple IDs are executed simultaneously but the uplink control mapping rules corresponding to the multiple IDs need to comply with the uplink control mapping rule corresponding to the leading ID. For the foregoing multiple ID, which ID is selected as the leading ID is determined by the anchor cell or determined by the coordinated cells through negotiation, or determined by a preset cell or by the UE. Taking the PRB as an example in the following, the process of allocating control physical resources is described through two instances. It is assumed that cell 1 and cell 2 form a CoMP cell. UE1-1 and UE1-2 belong to cell 1 (supposing cell-ID1 = 1), and UE2-1 belongs to cell 2 (supposing cell-ID2 = 2). UE1-1 and UE2-1 are UEs in the CoMP state, and are served by cell 1 and cell 2 in cooperation mode; UE1-2 is a non-CoMP UE and is a UE in an ordinary state, and is served by cell 1 only.

### Instance 1

In the uniform allocation mode, cell 1 and cell 2 allocates the corresponding same PRB as a CoMP-specific PRB. Only CoMP UEs (namely, UE1-1 and UE2-1) may use the CoMP-specific PRB. Cell 1 and cell 2 may use the CoMP-specific PRBs of the two parts to form a virtual cell, and allocate a special cell ID (namely, CoMP-ID) statically, or allocate the special cell ID dynamically according to the service requirements and/or load. It is assumed that the CoMP-ID is 100.

The CoMP-ID is configured for cell 1 and cell 2, and UE1-1 and UE2-1 belong to the CoMP virtual cell whose CoMP-ID is 100. The CoMP-ID is notified to UE1-1 and UE2-1. Further, cell-ID1 is notified to UE1-1, and cell-ID2 is notified to UE2-1.

UE1-1 and UE2-1 may further obtain the PRB and uplink PRB mapping rule corresponding to the CoMP-ID according to the CoMP-ID, and use the PRB to send CoMP uplink control information. Meanwhile, the UE1-1 may receive other information configured by cell 1, and UE2-1 may receive other information configured by cell 2, for example, downlink broadcast information.

### Instance 2

In the independent allocation mode, cell 1 allocates a PRB to UE1-1 and UE1-2, and cell 2 allocates a PRB to UE2-1. Cell 1 negotiates with cell 2 when cell 1 and cell 2 allocate the PRBs. Therefore, the PRBs of UE1-1 and UE2-1 can be coordinated for CoMP, and the PRB allocated by cell 1 to UE1-2 does not conflict with the PRB of UE1-1 and UE2-1 which are in the CoMP state. For example, the allocated PUCCHs of UE1-1 and UE2-1 correspond to different PRBs respectively to prevent mutual interference. The PRB allocated to UE1-2 is different from the PRB of UE2-1, but the same PRB may be allocated to UE1-1 and UE2-1.

In this embodiment, the uplink control information is sent by the PUCCH to which the control physical resource negotiated by multiple coordinated cells is mapped. The coordinated cells that collaborate to allocate the control physical resources may be all or part of the coordinated cells in the virtual cell that perform CoMP transmission.

In this embodiment, the resources of the coordinated cell may be implemented in the following mode:

It is assumed that there are five coordinated cells which are cell 1, cell 2, cell 3, cell 4, and cell 5 respectively; cell 1 and cell 2 form a CoMP cell(CoMP11), cell 2 and cell 3 form another CoMP cell(CoMP12), where cell 2 belongs to both CoMP11 and CoMP12; cell 4 and cell 5 form a CoMP cell (CoMP13). Neither CoMP11 nor CoMP12 shares any coordinated cell with CoMP13. The uplink physical resources used by CoMP11 and CoMP12 may be the same or different. At the time of using the uplink physical resources, CoMP11 and CoMP12 collaborate to use available uplink physical resources. If the uplink physical resources used by CoMP11 are partially the same as the uplink physical resources used by CoMP12, CoMP11 and CoMP12 need to collaborate to use the common uplink physical resources; if the uplink physical resources used by CoMP11 are totally different from the uplink physical resources used by CoMP12, the uplink physical resources may be allocated separately in a simple way. The uplink physical resources of CoMP13 are not correlated with the uplink physical resources of CoMP12 or CoMP11, and are free from constraint of correlation.

The PRACH or RS also faces the problem similar to the PUCCH. The following embodiments of the present invention describe only the difference between the PRACH/RS and the PUCCH with respect to the basic process. The details may refer to relevant content in Embodiment 2 and Embodiment 3 of the present invention, and are not repeated in the following embodiments of the present invention.

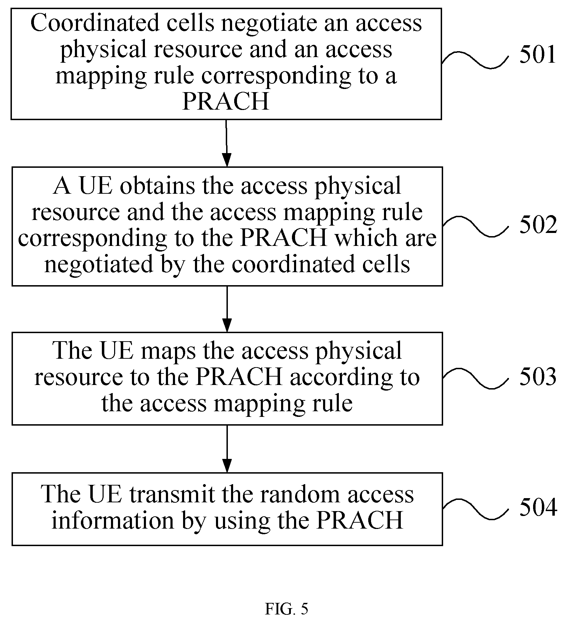

FIG 5 is a flowchart of a method for transmitting uplink information according to Embodiment 5 of the present invention. As shown in FIG. 5, compared with Embodiment 2, Embodiment 3, and Embodiment 4 of the present invention, the method for transmitting uplink information in Embodiment 5 may include the following steps:
Step 501: Coordinated cells negotiate an access physical resource and an access mapping rule corresponding to a PRACH.
Step 502: A UE obtains the access physical resource and the access mapping rule corresponding to the PRACH which are negotiated by the coordinated cells.
Step 503: The UE maps the access physical resource to the PRACH according to the access mapping rule.
Step 504: The UE transmits random access information by using the PRACH.

In this embodiment, an anchor cell alone may receive and process the random access information; or, all or part of serving cells receive the random access information but the anchor cell combines and processes the information; or, part or all of the serving cells receive the random access information, and it is determined that one of the serving cells processes the information through mutual negotiation among multiple coordinated cells.

In this embodiment, the access physical resource negotiated by the coordinated cells may come from the same group of access physical resources (namely, access physical resources of ordinary cells), and all coordinated cells apply the method of allocating and scheduling the resource uniformly; or, the access physical resource negotiated by the coordinated cells may come from different groups of access physical resources, and the coordinated cells negotiate the method of allocating and scheduling the resource independently or uniformly.

Optionally, the access physical resource negotiated by the coordinated cells may be different from the access physical resource of ordinary cells, for example, different random access sequence and/or different allocation modes.

In this embodiment, different coordinated cells collaborate to allocate and map the PRACH resources, and the resources in use may be allocated and mapped independently; or the resources of different coordinated cells are the same group of PRACH resources, and are allocated and mapped uniformly; or, part or all of the serving cells receive the random access information, and the anchor cell processes the information; or, one of the serving cells determined through negotiation processes the information, and the access cells coordinate the access physical resource and notify the occupation state of the access physical resource to each other; or, an access cell determined dynamically or semi-dynamically through negotiation processes the information. Such variations do not affect the implementation of the embodiment.

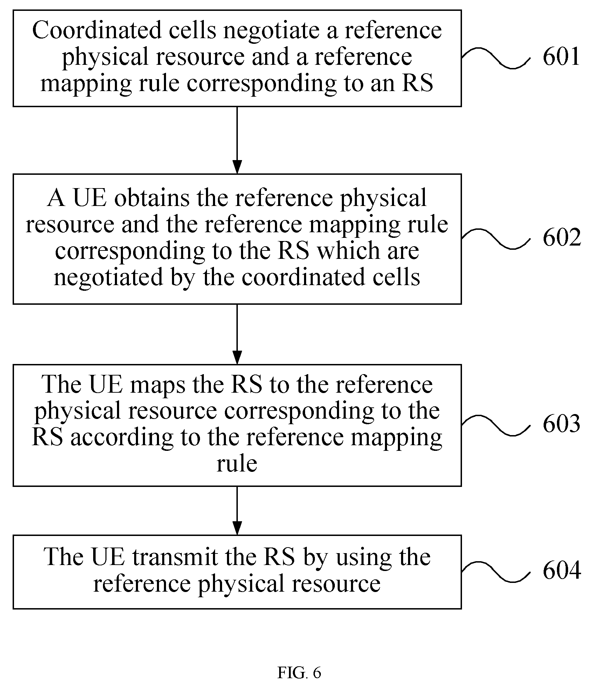

FIG 6 is a flowchart of a method for transmitting uplink information according to Embodiment 6 of the present invention. As shown in FIG 6, compared with Embodiment 2, Embodiment 3, Embodiment 4 and Embodiment 5 of the present invention, the method for transmitting uplink information in Embodiment 6 may further include the following steps:
Step 601: Coordinated cells negotiate a reference physical resource and a reference mapping rule corresponding to an RS.
Step 602: A UE obtains the reference physical resource and the reference mapping rule corresponding to the RS negotiated by the coordinated cells.
Step 603: The UE maps the RS to the reference physical resource corresponding to the RS according to the reference mapping rule.
Step 604: The UE transmits the RS by using the reference physical resource.

Types of the RS include one or both of: a Sounding Reference Information (SRS) and an uplink DeModulation Reference Information (DM-RS).

In this embodiment, the same SRS of ordinary cells is applicable. However, different coordinated cells collaborate to allocate and map the reference physical resource corresponding to the SRS (namely, SRS resource), and the resource in use may be allocated and mapped independently; or the resources of different coordinated cells are the same group of SRS resources, and are allocated and mapped uniformly; or different coordinated cells allocate the SRS corresponding to different antenna ports belonging to the same cell uniformly.

This embodiment may also employ the SRS specific to CoMP or the SRS specific to Long Term Evolution Advanced (LTE-A), which is different from the SRS of ordinary cells and is available only to the CoMP UE or the LTE-A UE respectively. The CoMP UE may be allocated with both the SRS specific to CoMP or LTE-A and the SRS of ordinary cells simultaneously, or allocated with only the SRS specific to CoMP or LTE-A.

In this embodiment, the resources occupied by the SRS specific to CoMP or LTE-A are the same as or different from the resources occupied by the SRS of ordinary cells. The SRS specific to CoMP or LTE-A occupies one or several of the following resources: a carrier, a subcarrier, a PRB, a subframe, a timeslot, an OFDM symbol, a sequence, a sequence offset, a sequence comb, a frequency hopping pattern, and a period.

The uplink DM-RS in this embodiment falls into one or several of the following scenarios:
Different coordinated cells allocate and map the same group of DM-RS resources uniformly; or
The coordinated cells collaborate to allocate the DM-RS of the same basic sequence but different sequence offsets; or
The coordinated cells apply the DM-RS of different root sequences which have low cross correlation; or
For the Multi-User Multi-Input Multi-Output (MU-MIMO) UEs in multiple cells, the coordinated cells may negotiate the DM-RS and allocate the DM-RS of the same root sequence but different sequence offsets; or allocate the DM-RS of different root sequences which have low cross correlation; or
Different coordinated cells allocate the uplink DM-RS corresponding to different antenna ports in the same cell uniformly.

In this embodiment, the resources occupied by the DM-RS specific to CoMP are the same as or different from the resources occupied by the SRS of ordinary cells, and the DM-RS specific to CoMP occupies one or several of the following resources: a carrier, a subcarrier, a PRB, a subframe, a timeslot, an OFDM symbol, a sequence, a sequence offset, a sequence comb, a frequency hopping pattern, and a period.

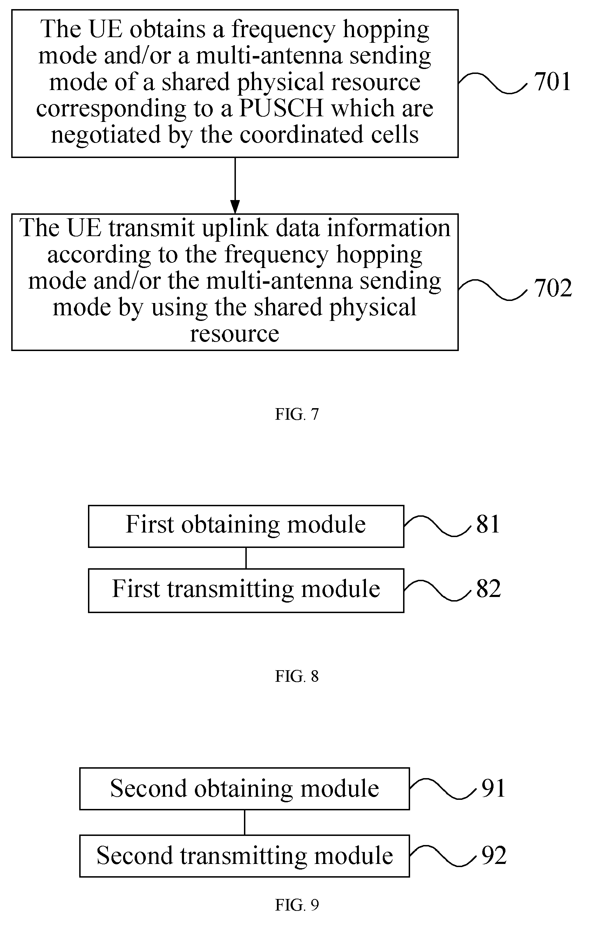

Further, although the resource blocks of the PUSCH in the prior art can be allocated through coordination of coordinated cells, the data scrambling codes of each coordinated cell and the frequency hopping pattern of the PUSCH are allocated separately. Consequently, the data sent by the coordinated cells that serve one UE simultaneously to this UE is inconsistent, interference exists between cells, and the resources conflict with each other in the cell. FIG. 7 is a flowchart of another method for transmitting uplink information according to Embodiment of the present invention. As shown in FIG. 7, compared with Embodiment 2, Embodiment 3, Embodiment 4, t Embodiment 5and Embodiment 6 of the present invention, the method for transmitting uplink information in Embodiment may include the following steps:
Step 701: A UE obtains a frequency hopping mode and/or a multi-antenna sending mode of a shared physical resource corresponding to a PUSCH which are negotiated by coordinated cells.
Step 702: The UE uses the shared physical resource to transmit uplink data according to the frequency hopping mode and/or the multi-antenna sending mode.

In this embodiment, when the uplink data of the PUSCH are received by multiple coordinated cells in cooperation mode, the coordinated cells may collaborate to use the shared physical resource (such as PRB, subframe and timeslot) corresponding to the same PUSCH, and collaborate to use the same uplink mapping rule. For example, all coordinated cells or several of the coordinated cells serving the UE abandon the frequency hopping mode and/or use the same multi-antenna sending mode; or use the same frequency hopping pattern and/or use the same multi-antenna sending mode.

The following uses examples to describe how the coordinated cells negotiate to allocate the frequency hopping pattern. It is assumed that there are two coordinated cells which are cell 1 and cell 2 respectively, and cell 1 and cell 2 form a CoMP cell (CoMP11); there are 4 UEs, which are UE1, UE2, UE3, and UE4 respectively; UE1 and UE2 are CoMP UEs served by CoMP11 in cooperation mode; the anchor cell of UE1 is cell 1; the anchor cell of UE2 is cell 2; UE3 and UE4 are non-CoMP UEs; UE3 belongs to cell 1, and UE4 belongs to cell 2. Because cell 1 and cell 2 receive the uplink data of the PUSCH of UE1 and UE2 in cooperation mode, both cell 1 and cell 2 may employ the frequency hopping mode but both cell 1 and cell 2 employ the same frequency hopping pattern; or, both cell 1 and cell 2 abandon employ the frequency hopping mode. Meanwhile, the following modes may be applied so that the frequency hopping patterns do not conflict between UE1 and UE3, and do not conflict between UE2 and UE4:
(1) The CoMP UE (UE1, UE2) and the non-CoMP UE (UE3, UE4) use shared physical resources in different resource areas (for example, use different PRB areas or different carriers) so that the shared physical resources do not conflict between the CoMP UE and the non-CoMP UE; and
(2) The CoMP UE (UE1, UE2) and the non-CoMP UE (UE3, UE4) use the same frequency hopping pattern, or frequency hopping patterns of the CoMP UE and the non-CoMP UE are coordinated so that the shared physical resources do not conflict between the CoMP UE and the non-CoMP UE.

Cell 1 and cell 2 can both identify the scrambling mode of UE1 and UE2. Because UE3 belongs to cell 1 and UE4 belongs to cell 2 respectively, UE3 may be identified by cell 1 only in the scrambling mode, and UE4 may be identified by cell 2 only in the scrambling mode. Definitely, UE3 and UE4 may be identifiable by cell 1 and cell 2 during allocation and use

In this embodiment, when the uplink data information of the PUSCH is received by multiple coordinated cells in cooperation mode, if the coordinated cells do not use the same shared physical resource (such as PRB, subframe, and timeslot) corresponding to the PUSCH, the coordinated cells require that the shared physical resources corresponding to the PUSCH should be staggered from each other rather than overlapped.

In this embodiment, when the uplink data of the PUSCH is sent by multiple coordinated cells in cooperation mode, if the coordinated cells do not use the same shared physical resource (such as PRB, subframe, and timeslot) corresponding to the PUSCH, the coordinated cells require that the shared physical resources corresponding to the PUSCH should be staggered from each other rather than overlapped.

For ease of description in the method embodiments above, the method is described as a series of operations. It is apparent to those skilled in the art that the operations are not order-sensitive and may occur simultaneously or in other order. Meanwhile, those skilled in the art are aware that the embodiments described herein are exemplary embodiments, and the involved operations and modules are not mandatory.

In the foregoing embodiments, each embodiment emphasizes a specific aspect, and the part not detailed in one embodiment may be detailed in another embodiment.

FIG 8 is a schematic structural diagram of an apparatus for transmitting uplink information according to Embodiment 8 of the present invention. As shown in FIG. 8, the apparatus for transmitting uplink information in this embodiment includes a first obtaining module 81 and a first transmitting module 82. The first obtaining module 81 obtains an uplink physical resource and an uplink mapping rule corresponding to a PUCCH and/or a PRACH and/or an RS which are negotiated by coordinated cells; and the first transmitting module 82 uses the uplink physical resource obtained by the first obtaining module 81 to transmit uplink control information and/or random access information and/or the RS according to the uplink mapping rule obtained by the first obtaining module 81.

The method in Embodiment 1 of the present invention and the functions of the UEs in Embodiment 2, Embodiment 3, Embodiment 4, Embodiment 5 and Embodiment 6 can be implemented by the apparatus for transmitting uplink information according to this embodiment.

In this embodiment of the present invention, multiple coordinated cells perform collaborative transmission. Multiple coordinated cells collaborate to allocate the uplink physical resource corresponding to the PUCCH and/or the PRACH and/or the RS. Therefore, the first transmitting module can use the uplink physical resource obtained by the first obtaining module to transmit the uplink control information and/or the random access information and/or the RS according to the uplink mapping rule obtained by the first obtaining module. In this way, the uplink control information, the random access information, and the RS can also be transmitted collaboratively by the coordinated cells; the coverage of the uplink control signal transmitted by the PUCCH, the random access signal transmitted by the PRACH, and the RS is the same as the coverage of the uplink data signal transmitted by the PUSCH; the effective coverage of the coordinated cells is improved; and the interference between coordinated cells is reduced effectively.

FIG 9 is a schematic structural diagram of another apparatus for transmitting uplink information according to Embodiment 9 of the present invention. As shown in FIG 9, the apparatus for transmitting uplink information in this embodiment includes a second obtaining module 91 and a second transmitting module 92. The second obtaining module 91 obtains a shared physical resource, a frequency hopping mode and/or a multi-antenna sending mode corresponding to a PUSCH which are negotiated by coordinated cells; and the second transmitting module 92 is adapted to use the shared physical resource obtained by the second obtaining module 91 to transmit uplink data according to the frequency hopping mode and/or the multi-antenna sending mode obtained by the second obtaining module 91.

The method in Embodiment 7 of the present invention can be implemented by the apparatus for transmitting uplink information according to this embodiment.

In the embodiments of the present invention, multiple coordinated cells negotiate the frequency hopping mode and/or multi-antenna mode of the shared physical resource. In this way, the conflict between the shared physical resources is reduced in the case that a frequency hopping technology or scrambling technology is applied.

Persons of ordinary skill in the art should understand that all or part of the steps of the method in any embodiment of the present invention may be implemented by a program instructing relevant hardware. The program may be stored in a computer readable storage medium. When the program runs, the program executes the steps of the method in any embodiment of the present invention. The storage medium may be any medium capable of storing program codes, such as Read-Only Memory (ROM), Random Access Memory (RAM), magnetic disk, or optical disk.

Finally, it should be noted that the above embodiments are merely provided for describing the technical solutions of the present invention, but not intended to limit the present invention. It is apparent that persons skilled in the art can make various modifications and variations to the invention without departing from the spirit and scope of the invention. The present invention is intended to cover the modifications and variations provided that they fall in the scope of protection defined by the following claims or their equivalents.

## Claims

1. A method for transmitting uplink information, comprising:
allocating, by a first coordinated cell, to a user equipment, UE, an uplink physical resource of a virtual cell to which the first coordinated cell belongs, wherein the virtual cell comprises one or more coordinated cells serving the UE, and the uplink physical resource comprises at least one of a control physical resource, an access physical resource and a reference physical resource; and
notifying, by the first coordinated cell, to the UE, the uplink physical resource so that the UE uses the uplink physical resource.

2. The method according to claim 1, wherein the step of allocating the UE the uplink physical resource of the virtual cell to which the first coordinated cell belongs comprises:
selecting, by the first coordinated cell, an unallocated uplink physical resource in one or more resource groups determined by the virtual cell, and allocating, by the first coordinated cell, the uplink physical resource to the UE, wherein the one or more resource groups are determined by one or more coordinated cells in the virtual cell, or
selecting, by the first coordinated cell, an unallocated uplink physical resource among uplink physical resources of the virtual cell and allocating the uplink physical resource to the UE, and Notifying the uplink physical resource allocated to the UE to other coordinated cells in the virtual cell.

3. The method according to claim 2, wherein
the step of selecting the unallocated uplink physical resource in the one or more resource groups determined by the virtual cell and allocating the uplink physical resource to the UE comprises: selecting, by the first coordinated cell, an uplink physical resource which minimally interferes with an allocated uplink physical resource in the one or more resource groups determined by the virtual cell, and allocating, by the first coordinated cell, the uplink physical resource to the UE; or
the step of selecting the unallocated uplink physical resource among the uplink physical resources of the virtual cell and allocating the uplink physical resource to the UE comprises: selecting, by the first coordinated cell, an uplink physical resource which minimally interferes with an allocated uplink physical resource among the uplink physical resources of the first coordinated cell and allocating the uplink physical resource to the UE, wherein the uplink physical resources of the first coordinated cell are different from uplink physical resources of other coordinated cells in the virtual cell.

4. The method according to claim 1, wherein
the step of notifying, by the first coordinated cell, the uplink physical resource to the UE comprises:
sending, by the first coordinated cell, identifier, ID, information corresponding to the uplink physical resource to the UE, wherein the ID information comprises at least one of a CoMP-ID, a UE-ID, an anchor cell-ID, or a serving cell-ID, wherein the CoMP-ID indicates the virtual cell.

5. The method according to any one of claims 1 to 4, wherein
the first coordinated cell is an anchor cell in the virtual cell; or
the first coordinated cell is a serving cell negotiated by multiple coordinated cells in the virtual cell; or
the first coordinated cell is a serving cell specified by the anchor cell in the virtual cell; or
the first coordinated cell is a preset serving cell in the virtual cell; or
the first coordinated cell is any serving cell in the virtual cell.

6. The method according to any one of claims 1 to 4, further comprising:
notifying, by the first coordinated cell, an uplink mapping rule to the UE, wherein
when the uplink physical resource comprises the control physical resource, the uplink mapping rule comprises an uplink control mapping rule; when the uplink physical resource comprises the access physical resource, the uplink mapping rule comprises an access mapping rule; when the uplink physical resource comprises the reference physical resource, the uplink mapping rule comprises a reference mapping rule.

7. The method according to any one of claims 1 to 4,
the method further comprises:
allocating, by the first coordinated cell, the first obj ect to the UE independently, and notifying the allocated object to the UE and the other coordinated cells in the virtual cell; or
allocating, by the first coordinated cell, the first object which is unallocated in the virtual cell to the UE, and notifying the allocated first object to the UE;
wherein the first object comprises at least one of a scrambling code, a frequency hopping mode, or a multi-antenna sending mode.

8. A method for transmitting uplink information, comprising:
obtaining an uplink physical resource and an uplink mapping rule corresponding to a second object which are negotiated by coordinated multi-point, CoMP, cells, wherein the second object comprises at least one of a Physical Uplink Control Channel, PUCCH, a Physical Random Access Channel, PRACH, or a Reference Signal, RS; and
transmitting the second object by using the uplink physical resource according to the uplink mapping rule.

9. The method according to claim 8, wherein
the step of obtaining the uplink physical resource and the uplink mapping rule corresponding to the second object which are negotiated by the coordinated cells comprises:
obtaining identifier, ID, information sent by the coordinated cells, wherein the ID information corresponds to the uplink physical resource and the uplink mapping rule corresponding to the second object which are negotiated by the coordinated cells; and
obtaining the uplink physical resource and the uplink mapping rule according to the ID information;
wherein the ID information comprises at least one of a CoMP-ID, a User Equipment, UE, ID, an anchor cell-ID and a serving cell-ID, and wherein the CoMP-ID indicates a virtual cell comprising multiple coordinated cells.

10. The method according to claim 8, wherein:
the uplink physical resource is allocated independently or uniformly after being negotiated by the coordinated cells.

11. A method for transmitting uplink information, comprising:
obtaining a frequency hopping mode and/or a multi-antenna sending mode of a shared physical resource corresponding to a Physical Uplink Shared Channel, PUSCH, which are negotiated by coordinated cells; and
transmitting, by using the shared physical resource, uplink data information according to the frequency hopping mode and/or the multi-antenna sending mode.

12. An apparatus for transmitting uplink information, comprising:
a first obtaining module, configured to obtain an uplink physical resource and an uplink mapping rule corresponding to a Physical Uplink Control Channel, PUCCH, and/or a Physical Random Access Channel, PRACH, and/or a Reference Symbol, RS, which are negotiated by coordinated cells; and
a first transmitting module, configured to use the uplink physical resource to transmit uplink control information and/or random access information and/or the RS according to the uplink mapping rule.

13. An apparatus for transmitting uplink information, comprising:
a second obtaining module, configured to obtain a frequency hopping mode and/or a multi-antenna sending mode of a shared physical resource corresponds to a Physical Uplink Shared Channel, PUSCH, which are negotiated by coordinated cells; and
a second transmitting module, configured to use the shared physical resource to transmit uplink data according to the frequency hopping mode and/or the multi-antenna sending mode.
